Europäisches Patentamt

European Patent Office

Office européen des brevets

(11) Publication number: **0 244 068**
**B1**

(12) **EUROPEAN PATENT SPECIFICATION**

(45) Date of publication of the patent specification:
07.02.90

(51) Int. Cl.⁴: **F16K 43/00, F16K 5/20, F16L 55/10**

(21) Application number: 87302086.1

(22) Date of filing: 11.03.87

(54) Ball valve for undersea pipelines.

(30) Priority: 12.03.86 NO 860923

(43) Date of publication of application:
04.11.87 Bulletin 87/45

(45) Publication of the grant of the patent:
07.02.90 Bulletin 90/6

(84) Designated Contracting States:
AT BE CH DE FR GB IT LI LU NL SE

(56) References cited:
FR-A- 2 353 775
US-A- 3 038 692
US-A- 3 653 631

Soviet Inventions Illustrated, section Q, week E 26,
August 11, 1982, Derwent Publications Ltd., London Q66

(73) Proprietor: DEN NORSKE STATS OLJESELSKAP A.S.,
Postboks 300 Forus, N-4001 Stavanger(NO)

(72) Inventor: Horvel, Knut, Folkvordveien,
N-4300 Sandnes(NO)

(74) Representative: Rees, David Christopher et al, Kilburn &
Strode 30 John Street, London WC1N 2DD(GB)

ACTORUM AG

## Description

The present invention relates to a ball valve for subsea applications, i.e. for use submerged in water fluid. The ball valve is particularly intended for deep water employment offshore, where access to the valve for necessary maintenance will be difficult.

Up to now shutdown and control valves in which vital parts are accessible for inspection, repair, replacement when in a submerged state without water getting into the pipeline system during maintenance operations or fluid leaking out of the pipeline system, have not been available for offshore installations.The only solution known has been to raise the entire installation to the sea surface or to build a tight compartment around the valve when carrying out maintenance. In terms of durability todays ball valves appear to be quite vulnerable when subjected to the action of the medium flowing through the valve. When liquid containing large amounts of particles flow through the valve, the particles tend to be forced into the valve outer chamber where they form a sediment on the packings, packing seats, bearings and other vital parts of the valve. This frequently causes the vital components to become damaged when operating the valve, or worst of all, the movable parts of the valve to become blocked, so that the valve becomes inoperable.

During cleansing of pipeline systems a scraper which is forced through pipeline and valves, is used. These scrapers scrape loose and push ahead loose particles; rust, dirt, etc. This material may also be forced into the exterior chamber of valves causing the same unfavourable effects as previously described. Particles that are forced past packings and seats, will also be capable of causing damage to these by erosion, and the flowing medium may be corrosive and therefore have a damaging effect on the vital valve components.

Thus, known ball valves exhibit features that strongly limit their operational safety and life-span in certain circumstances, and they usually cannot be overhauled without special shutoff and by-pass operations and/or shutdown of the pipeline in which the valve is connected.

Expensive and complicated solutions do exist for the purpose at hand, but these are also seriously limited in terms of what they are capable of accomplishing. Such expensive and complicated solutions, belonging to the prior art, are shown in GB 1216989, US 2663538 and US 4175577.

The British patent specification relates to fluid control valves which, in order to allow the valve to be removed from for instance a pipeline without the need for emptying the line, this valve is withdrawably mounted within a sleeve which in effect constitutes the plug of a plug cock or so-called ball valve. Mutually locking elements are provided so that the withdrawable valve commonly be withdrawn when the ball valve is in a closed position, the ends of the withdrawable valve being lodged in open ended slots in the sleeve to permit this. When the ball valve is open, the ends of the withdrawable valve fit into ports in the valve housing.

This prior art fluid control valve includes an obturating member mounted in a casing for movement between a closed position in which it obturates a bore through the casing, and an open position in which it allows fluid to flow through the casing bore. The casing is withdrawably mounted within a hollow sleeve member which is itself rotatably mounted in a canister for movement together with the casing between an open position in which ports in the sleeve are aligned with a bore through the canister and a closed position in which the sleeve obturates the canister bore. The casing can be withdrawn from the sleeve only when the sleeve is in the closed position. The canister bore has two seating rings in it for cooperation respectively with the upstream and downstream ends of the sleeve, and the exterior surface of the sleeve has a partly spherical shape at least in the regions where it cooperates with the seating rings. This previously known valve is structurally complicated and expensive, and its functional regularity also seems doubtful. It has serious limitations and is hardly suitable for mounting at great depths offshore.

US 2663538 relates to a ball valve for controlling fluid flow in onshore pipelines. It is particularly related to valves of relatively large capacity which, when closed, must be entirely or almost entirely liquid tight,and which, when open, must provide a relatively smooth passageway for the fluid flow in order to reduce hydraulic losses as much as possible. The spherical valve comprises a casing having an inlet and an outlet aligned on a longitudinal axis, a seat ring having a first sealing surface encompassing the outlet and disposed on the casing with its centre displaced from the axis; a rotor journaled in the casing to turn about a transverse axis intersecting the longitudinal axis, and rotor ring having a second sealing surface on the rotor adapted in one position of the rotor to abut the first sealing surface on the seat ring. This known spherical valve is clearly unsuitable for dismantling at great depths without taking special measures.

US 4175577 relates to a ball valve design which has a removable upper cover plate permitting the ball to be removed from the valve body. After removal of the cover plate, a separate cam tool is positioned within the bore of the ball which has been partially rotated from the full open position, and upon a return rotation of the ball with the cam tool therein to a full open position, an adjacent spring urged seat ring is cammed away from the ball to a retracted position. A seat ring retainer is then actuated to hold the seat ring in the retracted position. The cam tool is then used in a similar manner to cam the other opposite seat ring in the retracted position. The ball may then be removed with the seat rings for replacement or repair as desired. The seat rings and seals may in this way be removed and replaced without removal of the valve from the flowline in which the valve is mounted.

This previously known valve also cannot be used. at great depths without extensive additional requirements to prevent the surrounding seawater from penetrating into the pipeline to which the valve is connected, or the flowing medium (oil and/or gas) leaking out of the subsea pipeline during dismantling of the valve for inspection, overhauling, repair and change of components.

An object according to the present invention therefore is to provide a ball valve that preferably is intended for employment at great sea depths, which in a submerged position is capable of being dismantled for inspection, overhauling, repair, replacement of the valve's vital components without allowing seawater to penetrate into the subsea pipeline system to which the valve is connected, or flowing medium leaking out of the pipeline system. This should be achieved by means of a structurally simple ball valve without any need for the valve to cover or protect against the surrounding medium by any additional means.

It is a further object that the ball valve according to the present invention should be simple to assemble/dismantle and inexpensively produced and maintained.

According to the invention, there is provided a valve for subsea pipeline systems which lead a flowing medium comprising a housing and within the housing, a rotatable valve member having a bore therethrough and means for rotating the rotatable valve member between an open position in which the bore is aligned with the pipeline and a closed position in which the bore is out of alignment with the pipeline, characterised in that the valve member includes an upper ball member and a lower ball member, in which the upper ball member includes the main packings of the valve, and the lower ball member includes two sleeves, forming part of the bore in the valve member, the sleeves being axially movable between an operational position in which they co-operate with the housing to form a continuous passageway through the housing and prevent rotation of the valve member, and a withdrawn position in which they do not engage the housing thereby allowing rotation of the valve member between the open and closed positions.

Preferably, the upper ball member has a stem which is mounted in a valve housing bonnet and the upper ball member is connected to the lower ball member by means of a cylindrical control member and guide faces extending generally parallel to the stem axis. Preferably, the sleeves of the lower ball member can be moved by means of an axially movable rack engaging gear wheels mounted on the lower ball member which respectively engage a rack on each of the sleeves for movement back and forwards along the sleeve axis.

Preferably, the top of the rack threadably engages a screw which is connected to a rotor in a sleeve actuator, whereby rotation of the actuator and the screw causes an axial movement of the rack. Preferably, the sleeves are tapered in order to achieve at least partial equalisation of the axially directed pressure forces.

In an alternative arrangement, the sleeve is formed as an annular piston and is movable back and forwards along its own axis by a fluid pressure supplied through conduits respectively in the upper ball member and the lower ball member. In such a case, preferably, the conduits are provided with locking valves arranged to shut off automatically when the upper ball member is lifted up, thereby securing the sleeves against unintended axial displacement.

Preferably, a ball actuator is provided to rotate the valve member or ball member. Preferably, when the valve is in open position the continuous passageway of the sleeves forms a protection for the remaining components of the valve against corrosion and other harmful influence from the flowing medium and permits access to the vital components of the valve without disturbing the current flow of fluid through the valve.

In accordance to the present invention, therefore, the internal vital components of the ball valve, for instance the ball/stem, packings, packing seats, actuators, bearings, etc. can be inspected, overhauled, repaired or replaced while the valve is in a submerged position without allowing seawater to penetrate into the pipeline in which the valve is connected, and without allowing the flowing medium to leak out into the surrounding seawater. When the valve is open and in its normal operating condition, the internal vital components are separated from the flowing medium in the pipeline by means of a tight barrier and are therefore effectively protected against harmful influence from the flowing medium and/or contaminations and particles contained in the flowing medium. A considerably improved environment is therefore provided for the vital parts of the valve, compared to the environment of previously known ball valves used for similar purposes and the vital parts are accessible for maintenance without the use of complicated and expensive protection equipment. The invention represents therefore a considerable technical improvement regarding the life and functional safety of ball valves in subsea applications and similar application areas.

In a preferred embodiment therefore according to the invention the internal sleeves can be considered to be guided through the valve, namely from one opening in the valve housing through the ball to the second opening in the valve housing, so that the sleeves form a tight continuous passageway through the valve when open. The valve ball is sectioned into two with the tightening parts and the stem/actuator provided on the upper ball member and the internal sleeves in the lower ball member. The two ball members are loosely connected to each other and form in an assembled state a ball/stem device which is mounted/guided towards the valve housing and bonnet. When the valve is open the upper ball member, which is provided with tightening parts along with the stem/actuator, can be dismantled by being withdrawn vertically out of the valve housing, while the lower ball member with the internal sleeves will be left behind in the valve housing. By dismantling the valve in this manner, most of the vital components of the valve will become available for inspection, control, overhauling, repair and replacement.

More specifically, a preferred valve ball assembly according to the invention comprises two axially withdrawable internal sleeves that when the valve is open can be pushed outwards for engagement with guides in the valve housing, thereby forming a tight, continuous passageway from one opening in the valve housing through the ball assembly to a second opening in the valve housing. The sleeves can be pushed inwards into a position where the sleeves pass clear of its guides when the ball assembly rotates during closing of the valve.

Preferably, the actuators and transfer mechanism for moving the internal sleeves (which when the valve is in an open position, will enable the formation of a tight, continuous passageway), main packings, main packing seats, mountings for the ball assembly etc. are located in the valve housing in such a manner that these, when the valve is open and in normal position, are located on the outside of the tight, continuous passageway through the valve and therefore are protected from the harmful action of the flowing medium in the pipeline in which the valve is connected. The upper and lower ball members can suitably be joined by means of a cylindrical coaxial guide with a stem axis and/or by means of plane guiding surfaces/guiding grooves running parallel to the stem axis, and can be mounted/guided axially and radially in one unit in the bonnet of the valve housing and the valve housing itself.

Inspection, overhauling repair or replacement of vital parts, such as the main packings and seats can take place at any time without operational interruption and without leakage out of or into the pipeline.

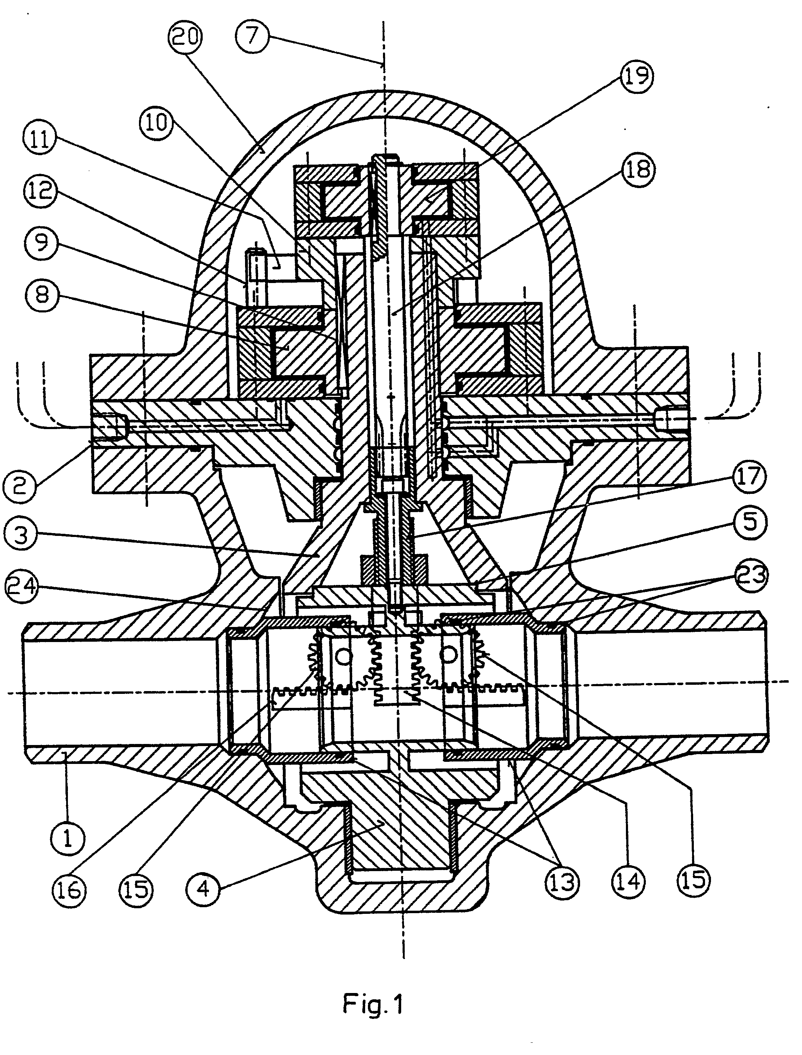

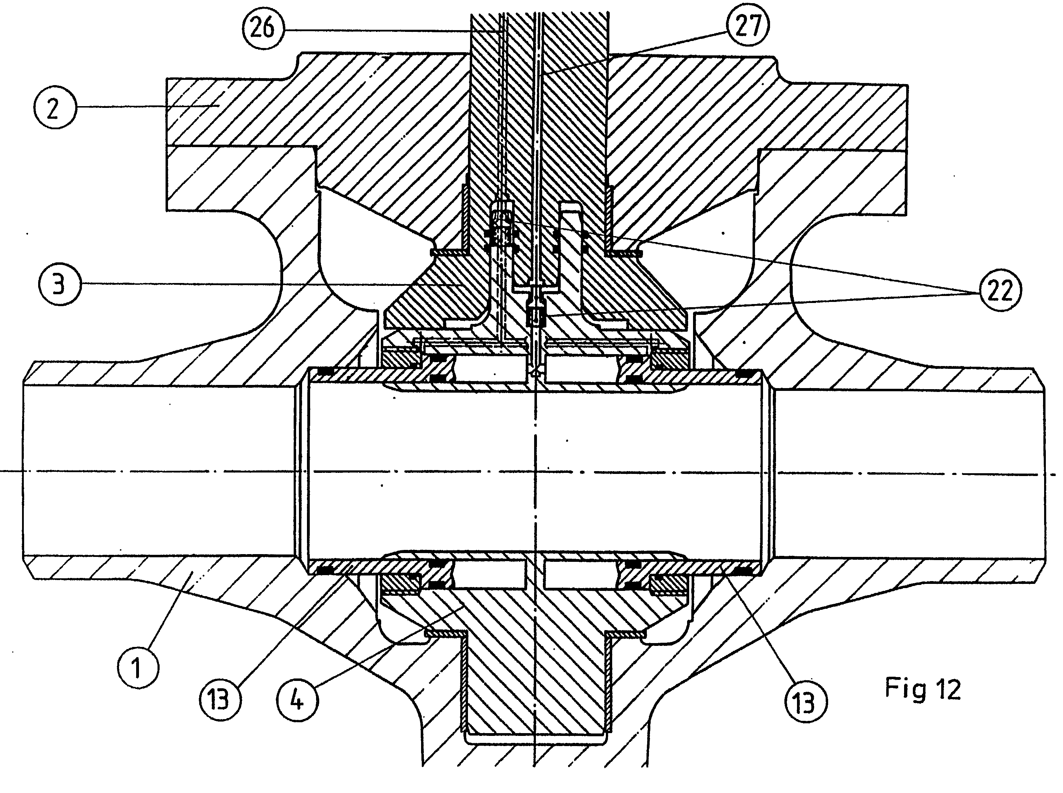

The invention may be carried into practice in various ways and two embodiments will now be described with reference to the accompanying drawings. These two embodiments of the invention comprise a "mechanically operated" variant (Figures 1-11) and a "hydraulically operated" variant (Figures 12-19). Components having a similar function in the two variants are referred to by the same reference numeral even if the components are occasionally not of identical shape in the drawings:-

Figure 1 is a longitudinal section through the stem axis of the first embodiment of a valve in accordance with the invention in which the ball is shown in the open position and the two internal sleeves are shown in the operational position;

Figure 2 is a horizontal elevation (valve cover is removed) of the valve of Figure 1 with horizontal section through the axis of the passageway;

Figure 3 is a cross section through the stem axis of the valve of Figure 1;

Figure 4 is a detail of the internal sleeves in the operational position, shown in side elevation;

Figure 5 is a view similar to Figure 1 showing the ball in the open position and the sleeves in the retracted position;

In Figures 6 to 9 the ball is shown in the closed position, while the sleeves are in the retracted position;

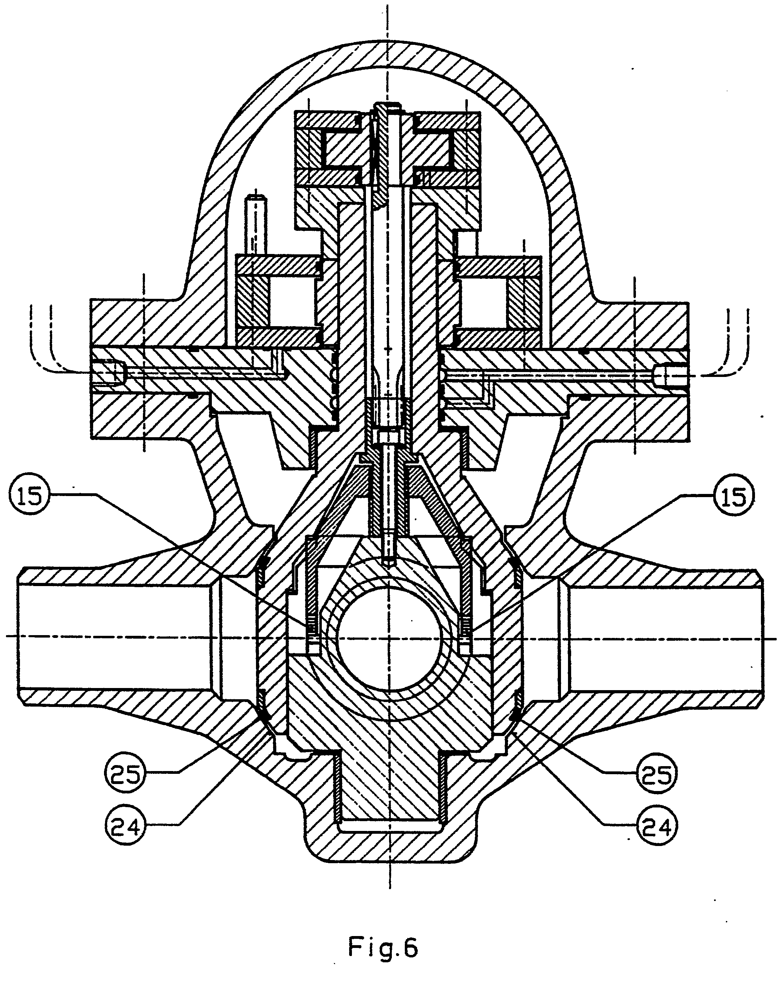

Figure 6 is a section corresponding to Figure 1;

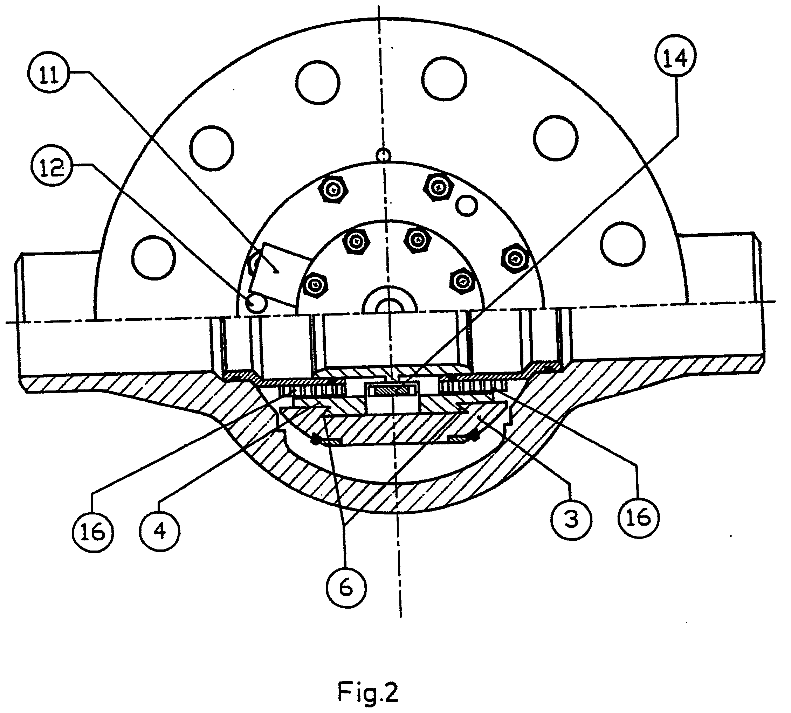

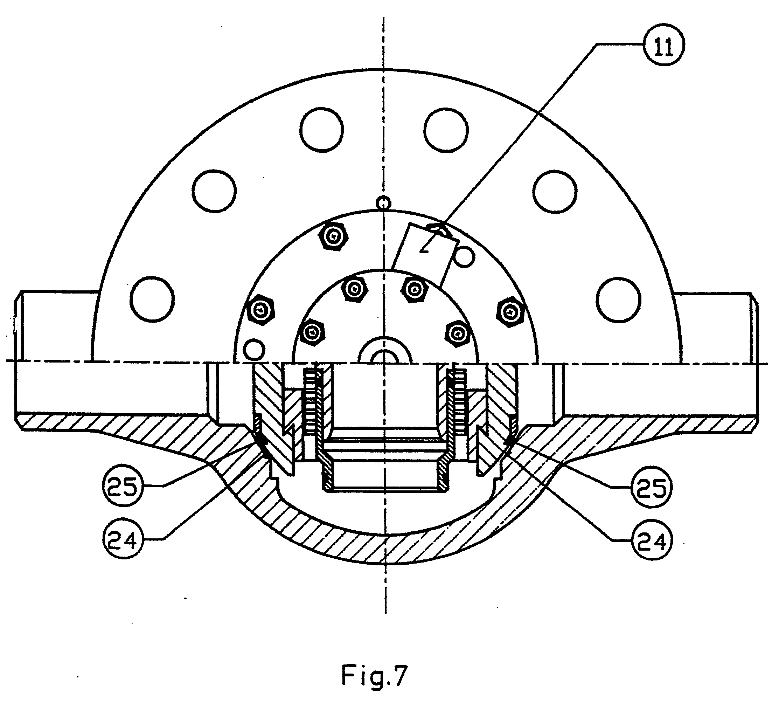

Figure 7 is an elevation/section corresponding to Figure 2;

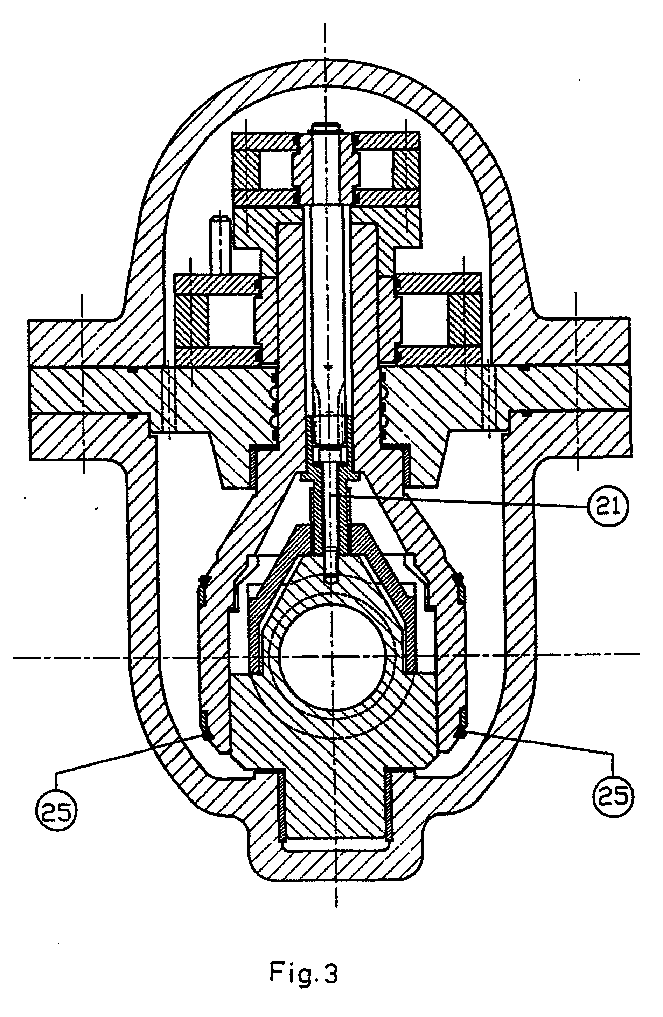

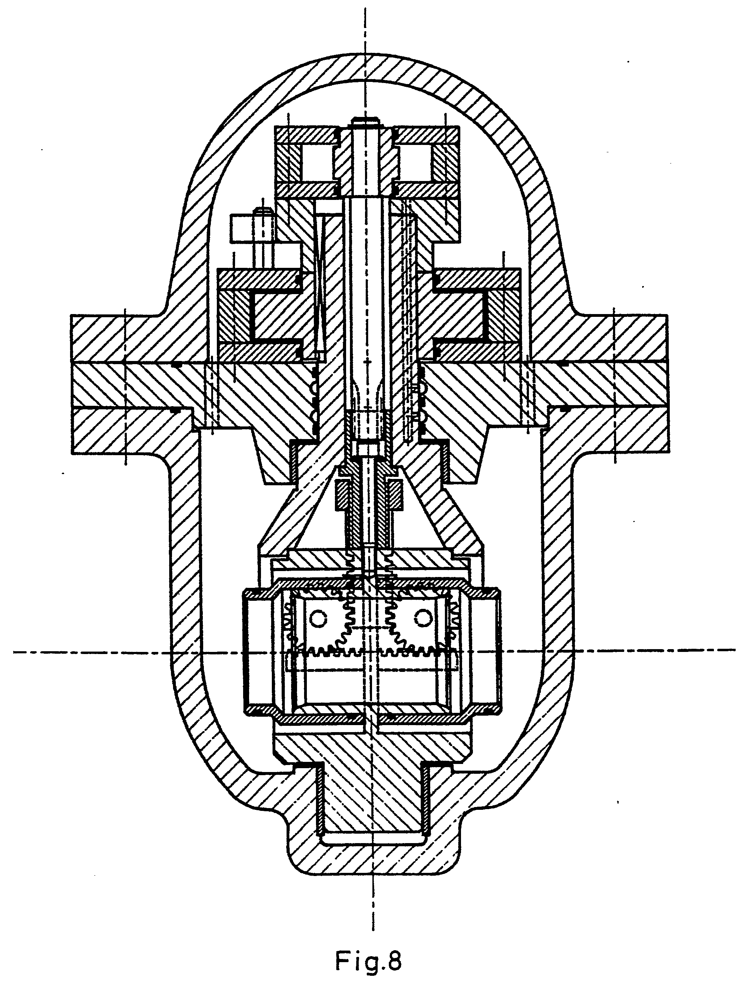

Figure 8 is a section corresponding to Figure 3;

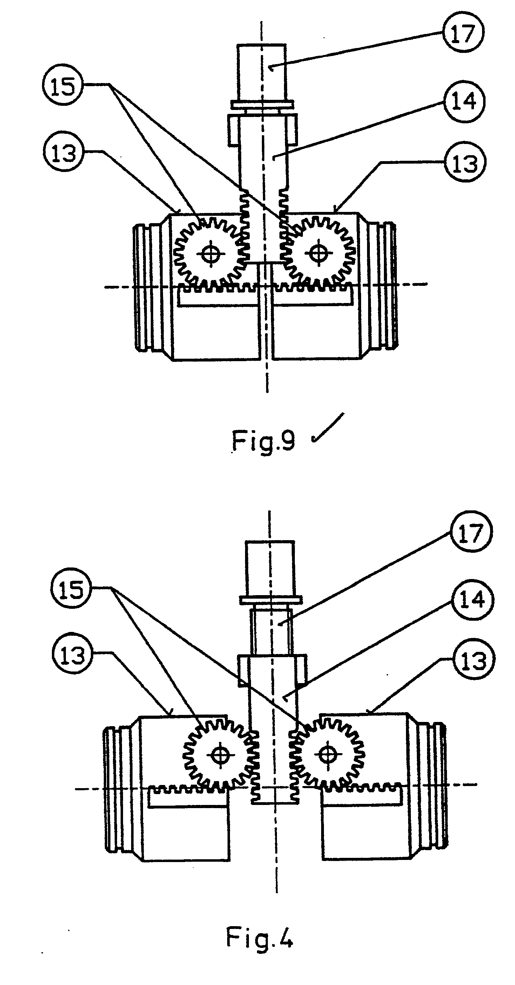

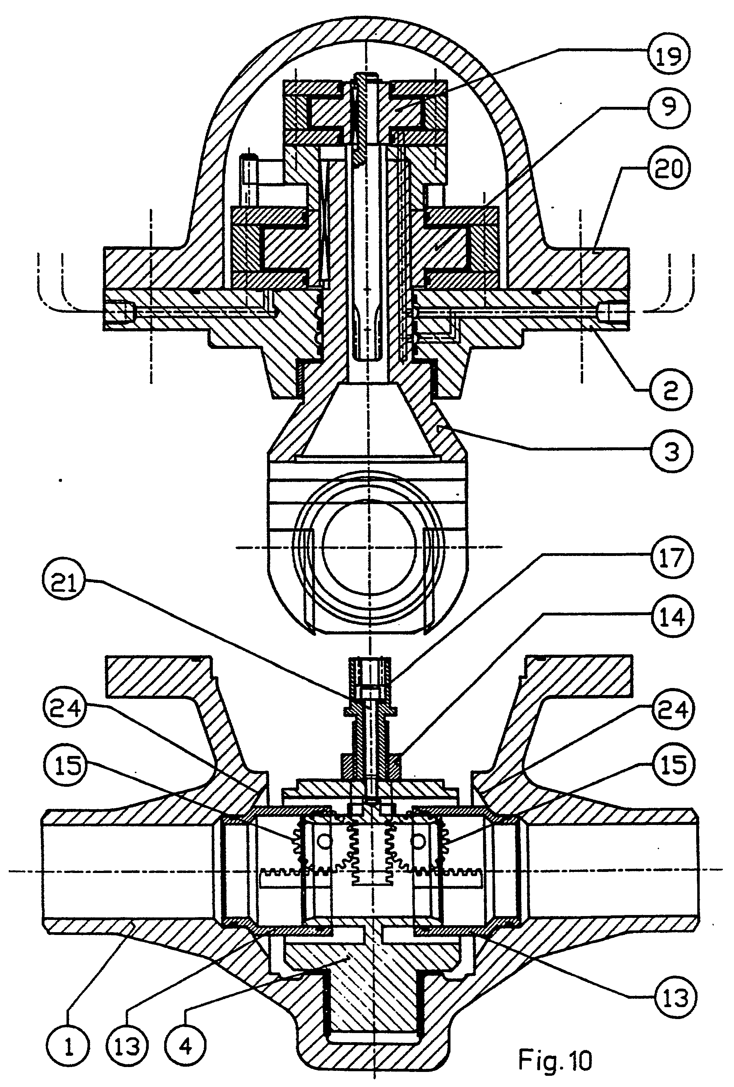

Figure 9 is a section corresponding to Figure 4.

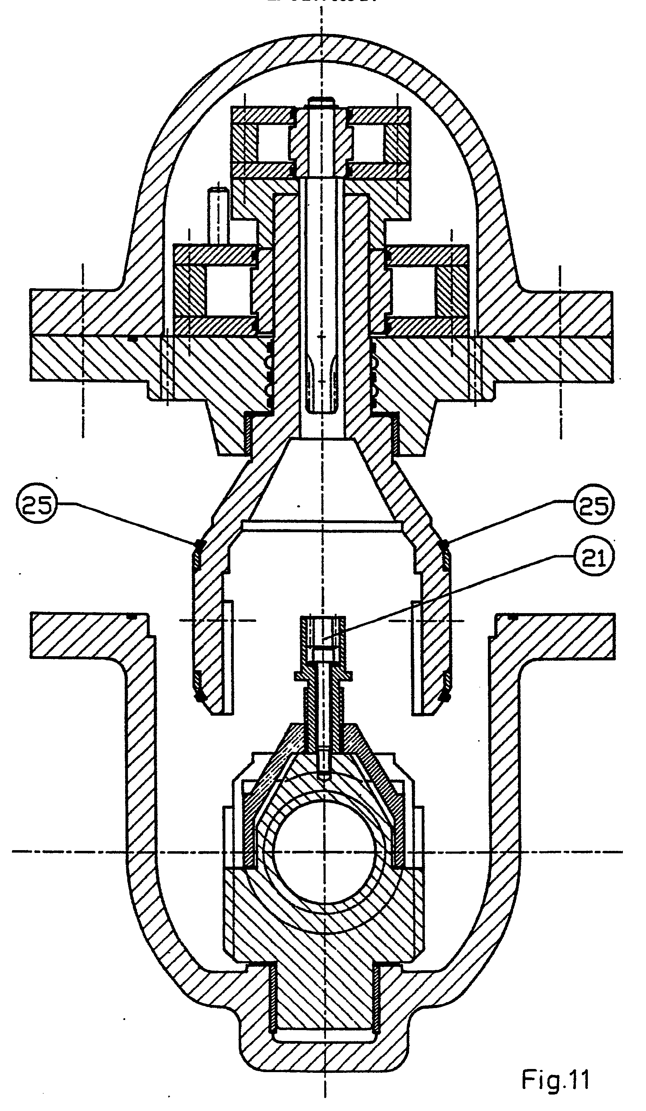

In Figures 10 and 11 the upper ball member with a valve cover, valve housing bonnet and actuators are dismantled, while the sleeves and lower ball member are in the operative position;

Figure 10 is a section corresponding to Figure 1;
Figure 11 is a section corresponding to Figure 3;
Figure 12 is a longitudinal section through the stem axis through a second embodiment of a valve in which the ball is in the open position, while the sleeves are in the operative position;

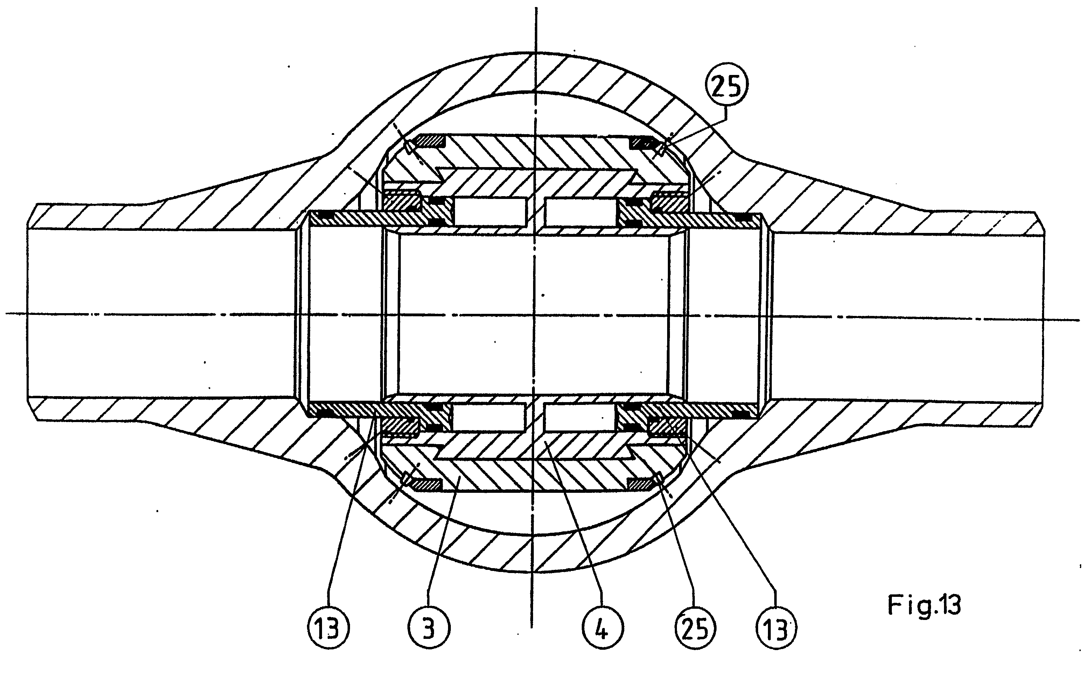

Figure 13 is a horizontal section through the passageway axis of the valve of Figure 12;

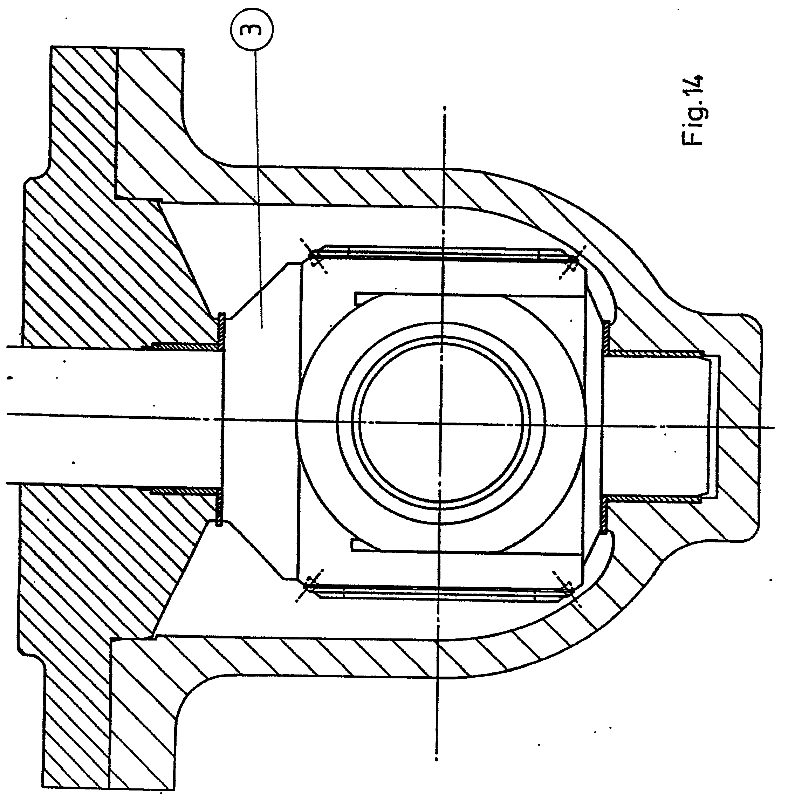

Figure 14 is a cross section through the stem axis of the valve of Figure 12;

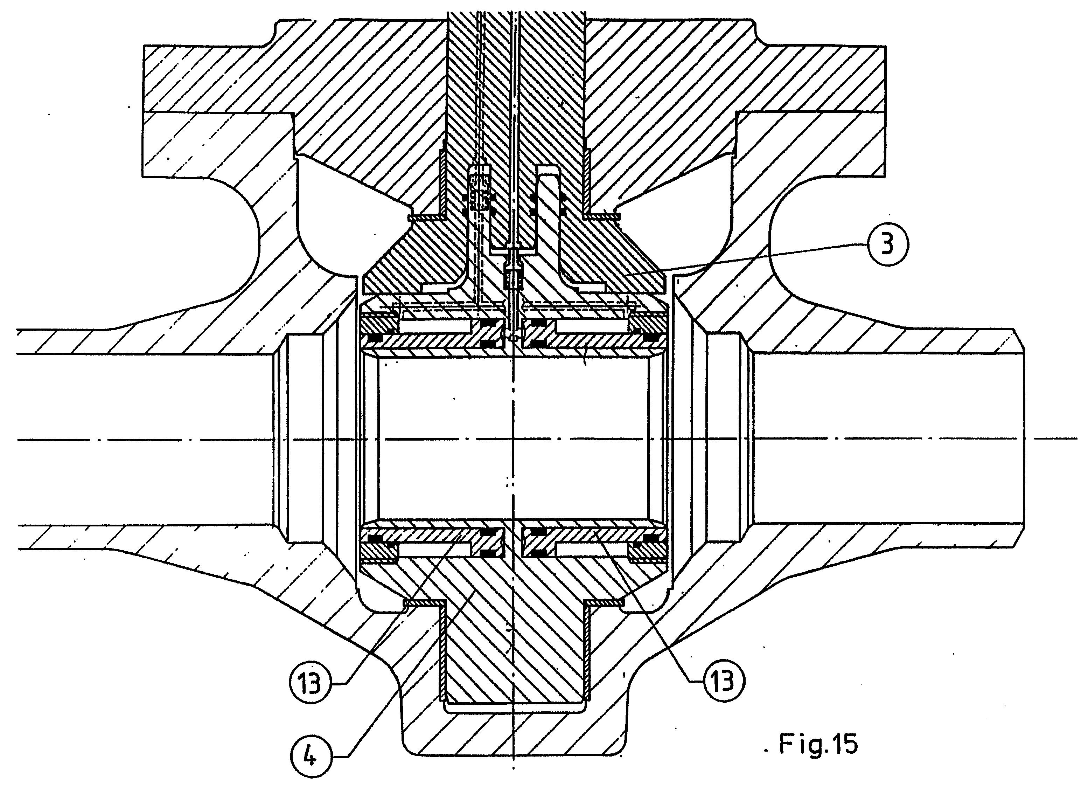

Figure 15 is a view similar to Figure 12 in which the ball is in the open position and the sleeves are in the retracted position;

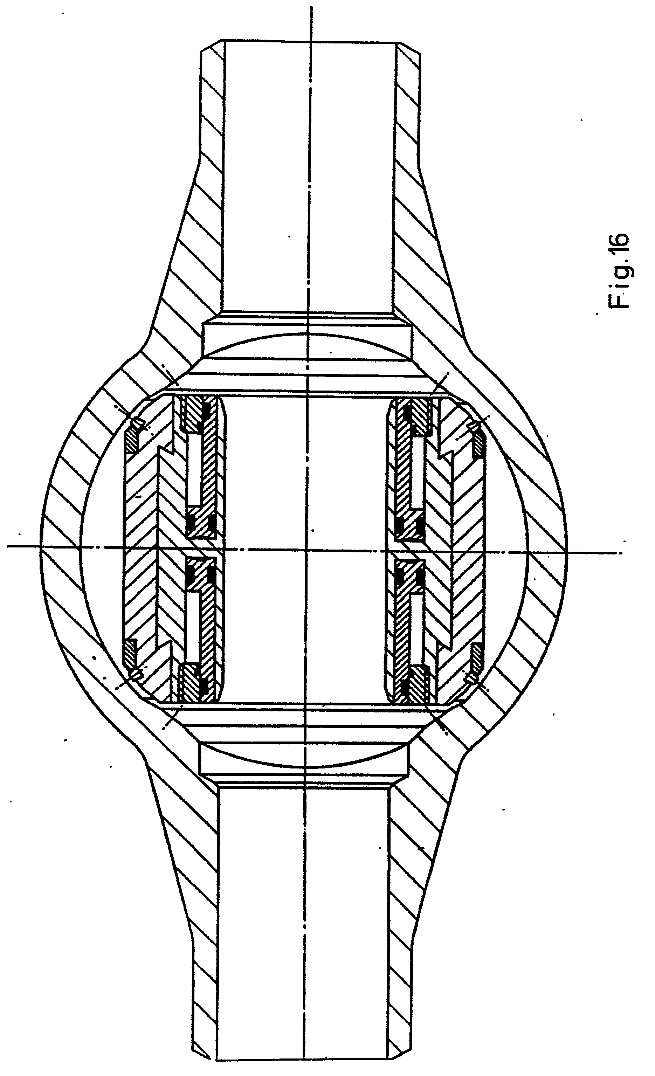

Figure 16 is a horizontal section through the passageway axis of the valve of Figure 15;

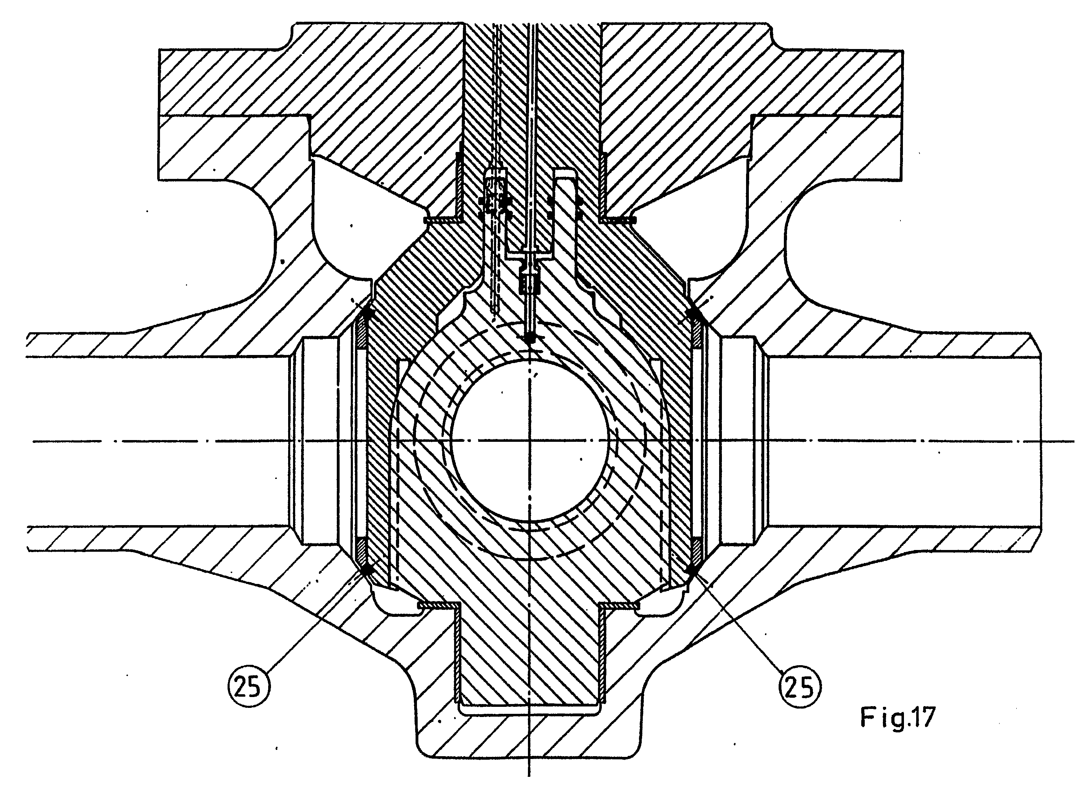

Figure 17 is a view similar to Figure 12 in which the ball is in the closed position, while the sleeves are in the retracted position;

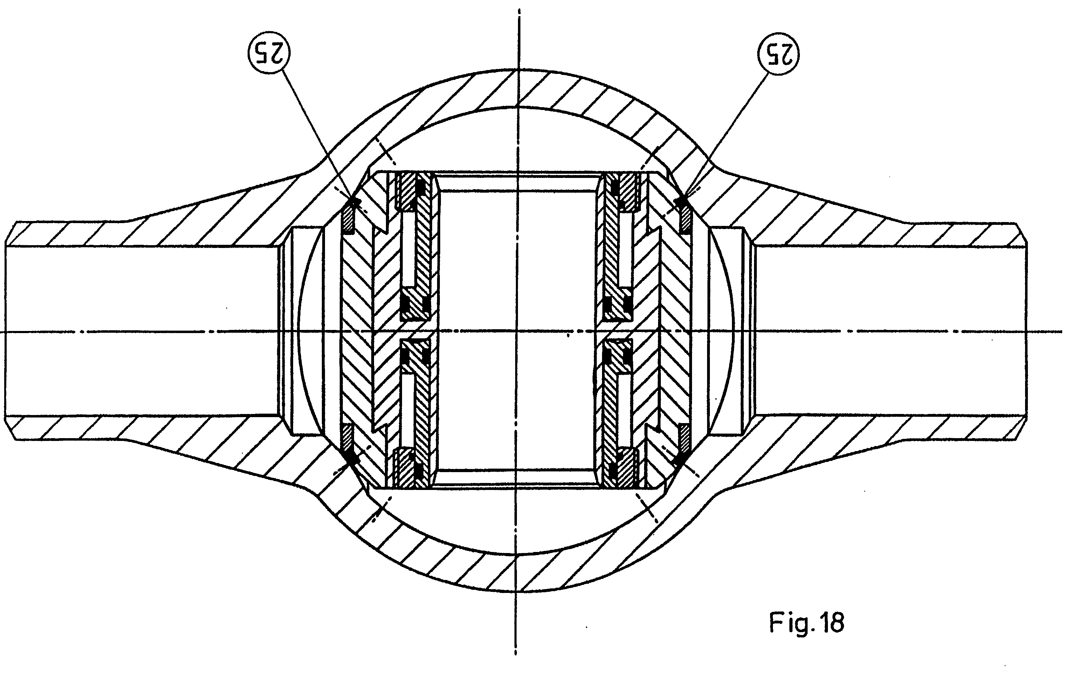

Figure 18 is a horizontal section through the passageway axis of the valve of Figure 17;

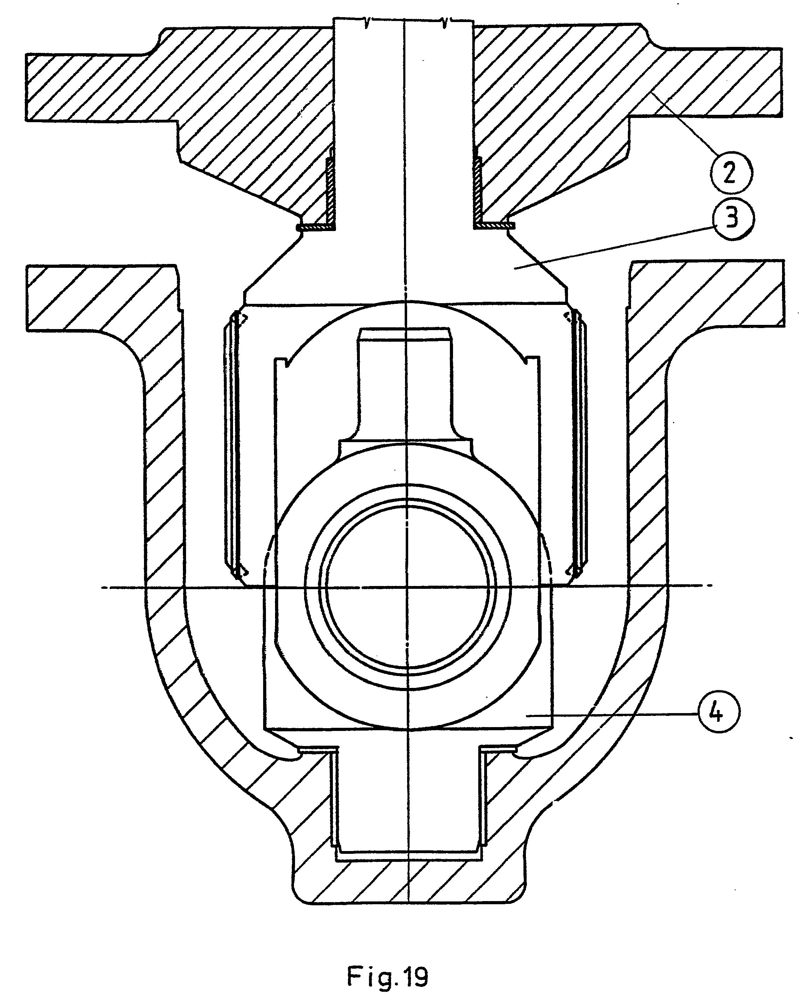

Figure 19 is a cross section through the stem axis, and where the section is outside the stem and ball, the upper ball member with valve cover, valve housing bonnet and actuator is dismantled, while the lower ball member with sleeves, is in the operative position.

The valve comprises a valve housing 1 with a lid or a so-called bonnet 2, and a valve cover 20 which controls and surrounds the moving and tightening components of the valve.

The moving/tightening components of the valve consist of a ball assembly which is provided with actuators for operating the tightening components.

The ball assembly consists of an upper ball member 3 in which the stem is mounted and guided in the valve housing bonnet 2. The upper ball member 3 is connected to a lower ball member 4 by means of a cylindrical control member 5 which is coaxially arranged relative to the stem axis and by means of guide faces 6 arranged parallel to the stem axis 7. The lower ball member 4 is mounted and guided in the valve housing 1 at its lower end.

The upper and lower ball members 3 and 4 form together a ball/stem arrangement which is mounted and guided axially and radially, respectively in the valve housing 1 and bonnet 2. This ball assembly can rotate about the stem axis 7, an operation which can be carried out either manually or - as shown in the drawings - by means of an actuator, in this case a ball actuator 8. The ball actuator 8 shown is of the hydraulic wing rotor type, but other known actuator types can also be employed in order to carry out the same operation. The casing of the ball actuator 8 is rigidly secured to the valve housing bonnet 2, and its rotor is rigidly connected, shown as a key joint 9, to the upper ball member 3 of the ball arrangement.

In the same way a hub 10 is rigidly secured to the stem of the upper ball member 3. This hub 10 is provided with a crank 11, which together with a gudgeon 12 forms a swing limit for the rotation of the ball actuator 8 of the ball assembly. This is necessary to ensure the correct positioning of the ball assembly in relation to the valve housing 1 when the following operations are to be carried out:

Two sleeves 13 are guided by means of their internal circumference against the body in the lower ball member 4 to be movable back and forwards along their common axis by suitable means.

In this mechanically operated variant, these movements are carried out mechanically, by means of a rack 14 and two pairs of gear wheels 15 which are mounted on the lower ball member 4 and engage a rack shaped part 16 on each of the sleeves 13. The top of the rack 14 is shaped as a nut which engages a screw 17. The screw 17 is located axially and radially relative to the upper and lower ball members, 3 and 4, and is connected to an axle 18 via a key joint that is axially withdrawable. The axle 18 is rigidly connected to the rotor in an actuator, hereafter called the sleeve actuator 19, whose external housing is rigidly connected with the hub 10 on the stem of the upper ball member 3.

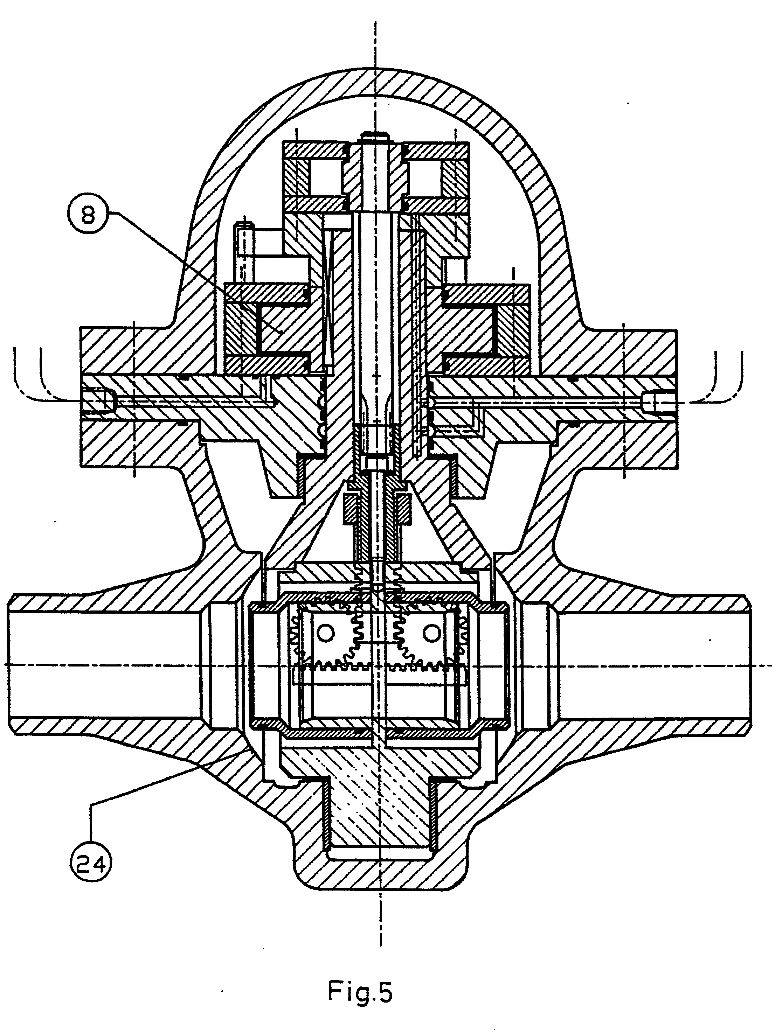

The sleeve actuator 19 serves to rotate the axle 18 and the screw 17 relative to the ball assembly causing, via the pitch of thread of the screw 17 and the rack 14, the rack 14 to move up and down in the direction of the stem axis 7. As previously mentioned, this movement is transferred via the gear wheels 15 to the sleeves 13, so that these move back and forwards along their axis, either outwards to the operative position (see Figure 1), or inwards to the retracted position (see Figure 5). To show this more clearly, the sleeves 13, gear wheel 15, rack 14 and screw 17 are shown withdrawn from other components in Figure 9 and 10.

Other known forms of mechanical transmitters, for example rocker arms, links, articulated cranks, chains/chain wheels etc., can be employed however, these are not described here in detail. The valve design, according to the present invention, exhibits several advantageous features which will be described in more detail below.

Figures 1 to 3 show the valve in an open position and in normal operation. The sleeves 13 are in their outer operating position, providing a leakage free connection for the fluid flow path via packings 23 between the lower ball member 4 and the openings in the valve housing 1.

The sleeves 13 therefore form part of a continuous, tight passageway through the valve, whereby the flowing medium is completely separated from the other cavities in the valve in which the vital, movable parts of the valve are located. The valves main packings 25, packing seats 24, bearings, actuators etc. are therefore efficiently protected against the destructive influence of the flowing medium in the pipeline. This feature of the present invention makes it, amongst other things, possible to fill the remaining cavities of the valve, outside of the passageway, with a suitable lubricating/preserving material that contributes to an additional improvement of the environment for the vital parts of the valve and therefore helps to ensure the optimum functioning of the valve.

The invention also enables a number of the vital components of the valve to be dismantled/replaced while the valve is in normal operation, i.e. without having to shut down the pipeline to which the valve is connected, or to effect it in a way that might cause any kind of leakage into or out of the pipeline system. This is achieved by means of the ball arrangement incorporating the upper ball member 3 which is loosely connected with the lower ball member 4.

The upper ball member 3 can, together with the valve housing bonnet 2, a valve cover 20 and the actuators 8, 19, be detached from the remaining components of the valve and lifted up into the direction of the stem axis 7. This approach for dismantling is shown in Figures 10 and 11, where it is clearly evident that the lower ball member 4 with the sleeves 13, the rack 14, the gear wheel 15 and the screw 17 stays in the operative position maintaining the continuous tight passageway through the valve housing 1.

The screw 17 is rendered self-locking against rotation when it is axially loaded and fixed in the axial direction in this state by means of a cap-bolt 21, so that the gear wheel mechanism 14, 15 can resist any possible axial force on the sleeves 13 caused by internal pressure in the pipeline to which the valve is connected. The sleeves 13 are thereby effectively secured against any unintended displacement which might otherwise cause leakage during the dismantling operation.

Axial forces on the sleeves 13, caused by internal pressure, can be reduced/eliminated by making the sleeves 13 graduated, which ensures complete or partial equalisation of the axially directed pressure. Figure 1 shows a sleeve design which is believed to provide total balance of pressure forces.

Following the dismantling operation, the main packings 25 become accessible for inspection/replacement. Furthermore, it is possible by means of suitable facilities to inspect and cleanse the seats 24.

Closure of the valve may be accomplished in the following way. While in the open position (Figure 1) the sleeve actuator 19 is operated to make the sleeves 13 retract into the lower ball member 4, thereby enabling the sleeves to pass the seats 24 in the valve housing unhindered before the ball arrangement starts to rotate (Figure 5). Thereafter the ball actuator 8 is activated, causing the ball arrangement to rotate by 90 degrees, so that the main packings 25 engage their seats 24 in the valve housing 1. This situation is shown in Figure 6–9. It will be appreciated that when the valve is in the closed position, withdrawal of the valve parts is prevented by the engagement between the upper ball member 3 and the seats 24 via the main packings 25.

When the valve is opened, this sequence of operations takes place in the reverse order.

The second illustrated embodiment of the invention, the hydraulically operated variant, deviates from the mechanically operated variant only in the way in which the sleeve parts 13 are operated. This hydraulically operated variant will be described in more detail with reference to Figures 12 to 19. In these figures, the ball arrangement 8 and the valve cover 2 are omitted for clarity.

The mechanism for operating the sleeves 13 in the first embodiment is eliminated, thus each sleeve 13 is formed as an annular piston which can be moved by a known method back and forwards along their common axis, by fluid pressure, for example by oil pressure. This fluid pressure is supplied through conduits 26,27, respectively in the upper ball member 3 and the lower ball member 4 to each side of the annular pistons created by the sleeves 13. The sleeves 13 form therefore integrated part of a linear working piston actuator which can be regarded as equivalent to the sleeve actuator 19 in the mechanically operated valve variant.

When dismantling the hydraulically operated variant in its operating position (Figure 12) the sleeves 13 are secured against unintended axial displacement as a result of the pressure force from the flowing medium by providing the conduits 26,27 with locking valves 22, which are arranged to shut off automatically when the upper ball member 3 is lifted up. The enclosed oil volume thereby prevents the sleeves 13 from moving.

All the operating procedures, such as the opening and closing sequences, dismantling, inspections, repair possibilities etc. are the same for the two illustrated embodiment of the invention, and the hydraulically operated variant therefore exhibit the same advantageous features as the mechanically operated variant.

**Claims**

1. A valve for subsea pipeline systems which lead a flowing medium comprising a housing and within the housing, a rotatable valve member having a bore therethrough and means for rotating the rotatable valve member between an open position in which the bore is aligned with the pipeline and a closed position in which the bore is out of alignment with the pipeline, characterised in that the valve member (3) includes an upper ball member (3) and a lower ball member (4), in which the upper ball member (3) includes the main packings (25) of the valve, and the lower ball member (4) includes two sleeves (13), forming part of the bore in the valve member, the sleeves being axially movable between an operational position in which they cooperate with the housing to form a continuous passageway through the housing and prevent rotation of the valve member, and a withdrawn position in which they do not engage the housing thereby allowing rotation of the valve member between the open and closed positions.

2. A valve as claimed in Claim 1, characterised in that the upper ball member (3) has a stem which is mounted in a valve housing bonnet (2) and the upper ball member (3) is connected to the lower ball member (4) by means of a cylindrical control member (5) and guide faces (6) extending generally parallel to the stem axis (7).

3. A valve as claimed in Claim 1 or Claim 2, characterised in that the sleeves (13) of the lower ball member (4) can be moved by means of an axially movable rack (14) engaging gear wheels (15) mounted on the lower ball member (4) which respectively engage a rack (16) on each of the sleeves (13) for movement back and forwards along the sleeve axis.

4. A valve as claimed in Claim 3, characterised in that the top of the rack (14) threadably engages a screw (17) which is connected to a rotor in a sleeve actuator (19), whereby rotation of the actuator (19) and the screw (17) causes an axial movement of the rack (14).

5. A valve as claimed in any preceding claim, characterised in that the sleeves (13) are tapered in order to achieve at least partial equalisation of the axially directed pressure forces.

6. A valve as claimed in Claim 1, characterised in that each sleeve (13) is formed as an annular piston and is movable back and forwards along its own axis by a fluid pressure supplied through conduits (26,27) respectively in the upper ball member (3) and the lower ball member (4).

7. A valve as claimed in Claim 6 characterised in that the conduits (26,27) are provided with locking valves (22) arranged to shut off automatically when the upper ball member (3) is lifted up, thereby securing the sleeves (13) against unintended axial displacement.

8. A valve as claimed in any preceding claim characterised by a ball actuator (8) for rotation of the valve member.

9. A valve as claimed in any preceding claim characterised in that when the valve is in open position the continuous passageway of the sleeves (13) forms a protection for the remaining components of the valve against corrosion and other harmful influence from the flowing medium and permits access to the vital components of the valve without disturbing the current flow of fluid through the valve.

**Patentansprüche**

1. Ventil für submarine Rohrleitungssysteme zur Leitung eines fließenden Mediums, bestehend aus einem Gehäuse und innerhalb des Gehäuses aus einem drehbaren Ventilorgan mit einer hindurchführenden Bohrung und Mittel zur Drehung des drehbaren Ventilorgans zwischen einer offenen Stellung, in der die Bohrung zur Rohrleitung fluchtend verläuft, und einer geschlossenen Stellung, in der die Bohrung zur Rohrleitung nicht fluchtend liegt, dadurch gekennzeichnet, daß das Ventilorgan (3) ein oberes Kugelorgan (3) und ein unteres Kugelorgan (4) beinhaltet, wobei das obere Kugelorgan (3) Hauptdichtungen (25) des Ventils beinhaltet, und das untere Kugelorgan (4) zwei Hülsen (13) aufweist, die einen Teil der Bohrung des Ventilorgans bilden, die Hülsen axial verschiebbar sind zwischen einer Betriebsposition, in der sie mit dem Gehäuse zusammenwirken, um einen kontinuierlichen Durchgang durch das Gehäuse zu bilden und eine Drehung des Ventilorgans zu verhindern, und einer zurückgezogenen Position, in der sie nicht in das Gehäuse eingerückt sind und dadurch eine Drehung des Ventilorgans zwischen einer offenen und einer geschlossenen Stellung ermöglichen.

2. Ventil nach Anspruch 1, dadurch gekennzeichnet, daß das obere Kugelorgan (3) mit einer Spindel versehen ist, die in der Ventilgehäuseschutzkappe (2) befestigt ist, und das obere Kugelorgan (3) mittels eines zylindrischen Regelorganes (5) und durch Führungsflächen (6), die sich ungefähr parallel zur Spindelachse (7) erstrecken, mit dem unteren Kugelorgan (4) verbunden ist.

3. Ventil nach Anspruch 1 oder 2, dadurch gekennzeichnet, daß die Hülsen (13) des unteren Kugelorgans (4) durch eine axial bewegliche Zahnstange (14) bewegt werden können, die in an dem unteren Kugelorgan (4) befestigte Zahnräder (15) eingreift, die wiederum in Zahnstangen (16) an jeder der beiden Hülsen (13) zur Vor- und Zurückbewegung entlang der Hülsenachse eingreifen.

4. Ventil nach Anspruch 3, dadurch gekennzeichnet, daß der Oberteil der Zahnstange (14) gewerbsmäßig in einer Schraube (17) eingreift, die mit einem Rotor in einem Hülsenbetätiger (19) verbunden ist, wodurch eine Drehung des Betätigers (19) und der Schraube (17) eine axiale Bewegung der Zahnstange (14) bewirkt.

5. Ventil nach einem der vorhergehenden Ansprüche, dadurch gekennzeichnet, daß die Hülsen (13) konisch ausgebildet sind, um zumindest einen teilweisen Ausgleich der axial gerichteten Druckkräfte zu erzielen.

6. Ventil nach Anspruch 1, dadurch gekennzeichnet, daß jede Hülse (13) als ringförmige Kolben ausgebildet ist und durch Flüssigkeitsdruck, der durch Kanäle (26, 27) im oberen Kugelorgan (3) und im unteren Kugelorgan (4) zur Verfügung gestellt wird, entlang ihrer eigenen Achse vor und zurück bewegt werden können.

7. Ventil nach Anspruch 6, dadurch gekennzeichnet, daß die Kanäle (26, 27) mit Sperrventilen (22) versehen sind, die als automatische Sperre dienen, wenn das obere Kugelorgan (3) angehoben wird, wodurch die Hülsen (13) gegen unbeabsichtigte axiale Verschiebung gesichert sind.

8. Ventil nach einem der vorhergehenden Ansprüche, gekennzeichnet durch einen Kugelbetätiger (8) zur Drehung des Ventilorgans.

9. Ventil nach einem der vorhergehenden Ansprüche, dadurch gekennzeichnet, daß bei einer Offenstellung des Ventils der kontinuierliche Durchgang der Hülsen (13) einen Schutz für die restlichen Ventilteile gegen Korrosion und andere schädigenden Einflüsse durch das durchströmende Medium darstellt, und ohne Störung der Strömung durch das Ventil einen Zugang zu den wichtigen Ventilteilen zuläßt.

**Revendications**

1. Vanne pour réseaux de conduites sous-marines qui canalisent un agent en écoulement, comprenant un corps et, dans le corps, un obturateur tournant traversé par une lumière et un moyen pour faire tourner l'obturateur tournant entre une position d'ouverture, dans laquelle la lumière est en ligne avec la conduite et une position de fermeture, dans laquelle la lumière n'est plus en ligne avec la conduite, caractérisée en ce que l'obturateur comprend un élément d'obturateur supérieur (3) et un élément d'obturateur inférieur (4), l'élément d'obturateur supérieur (3) comprenant les bourrages principaux (25) de la vanne et l'élément d'obturateur inférieur (4) comprenant deux douilles (13) qui font partie de la lumière prévue dans l'obturateur, les douilles étant mobiles axialement entre une position active, dans laquelle elles coopèrent avec le corps pour former un passage continu à travers ce corps et empêcher l'obturateur de tourner, et une position rétractée, dans laquelle elles ne sont pas en contact avec le corps et permettent ainsi une rotation de l'obturateur entre la position d'ouverture et la position de fermeture.

2. Vanne suivant la revendication 1, caractérisée en ce que l'élément d'obturateur supérieur (3) comporte une tige qui est montée dans un chapeau de corps de vanne (2) et l'élément d'obturateur supérieur (3) est relié à l'élément d'obturateur inférieur (4) à l'aide d'un organe de commande cylindrique (5) et de faces de guidage (6) qui s'étendent en substance parallèlement à l'axe (7) de la tige.

3. Vanne suivant la revendication 1 ou 2, caractérisée en ce que les douilles (13) de l'élément d'obturateur inférieur (4) peuvent être déplacées à l'aide d'une crémaillère axialement mobile (14) qui est en prise avec des roues dentées (15) montées sur l'élément d'obturateur inférieur (4) et en prise, respectivement, avec une crémaillère (16) prévue sur chacune des douilles (13) de manière à se déplacer en arrière et en avant le long de l'axe de la douille.

4. Vanne suivant la revendication 3, caractérisée en ce que l'extrémité supérieure de la crémaillère (14) est en prise par vissage avec une vis (17) qui est reliée à un rotor dans un actionneur de douilles (19), la rotation de l'actionneur (19) et de la vis (17) provoquant un déplacement axial de la crémaillère (14).

5. Vanne suivant l'une quelconque des revendications précédentes, caractérisée en ce que les douilles (13) sont coniques afin de réaliser une égalisation au moins partielle des forces de pression dirigées axialement.

6. Vanne suivant la revendication 1, caractérisée en ce que chaque douille (13) a la forme d'un piston annulaire et peut être déplacée vers l'arrière et vers l'avant le long de son axe propre par une pression de fluide fournie par des conduits (26, 27) respectivement dans l'élément d'obturateur supérieur (3) et l'élément d'obturateur inférieur (4).

7. Vanne suivant la revendication 6, caractérisée en ce que les conduits (26, 27) sont pourvus de soupapes de blocage (22) propres à se fermer automatiquement lorsque l'élément d'obturateur supérieur (3) est soulevé, fixant ainsi les douilles (13) contre tout déplacement axial accidentel.

8. Vanne suivant l'une quelconque des revendications précédentes, caractérisée par un actionneur d'obturateur (8) pour faire tourner l'obturateur.

9. Vanne suivant l'une quelconque des revendications précédentes, caractérisée en ce que lorsqu'elle se trouve en position d'ouverture, le passage continu des douilles (13) forme une protection pour les éléments restants de la vanne contre la corrosion et contre une éventuelle influence nuisible de l'agent en écoulement et permet d'accéder aux éléments vitaux de la vanne sans perturber l'écoulement du fluide en cours à travers cette vanne.

EP 0 244 068 B1

Fig. 1

Fig.2

Fig. 3

Fig.9

Fig.4

Fig.5

Fig.6

Fig.7

Fig.8

Fig. 10

Fig.11

Fig 12

Fig.13

EP 0 244 068 B1

Fig.14

EP 0 244 068 B1

EP 0 244 068 B1

Fig.15

Fig.16

Fig.17

Fig. 18

EP 0 244 068 B1

Fig. 19